# EUROPEAN PATENT SPECIFICATION

(11) **EP 0 568 763 B1**
(45) Date of publication and mention of the grant of the patent: **05.06.1996**
(21) Application number: 92830684.4
(22) Date of filing: 23.12.1992
(51) Int. Cl.: G01G 11/00, B07C 5/18

(54) **Apparatus for the automatic selection and calibration of fruits and similar**
Vorrichtung zum automatischen Selektieren und Eichen von Früchten und dergleichen
Appareil pour la sélection automatique et le calibrage de fruits et analogue

(30) Priority: 07.05.1992 IT BO920172
(43) Date of publication of application: 10.11.1993
(73) Proprietor: S.A.M.M.O. S.r.l., I-47023 Cesena (Forli) (IT)
(72) Inventor: Zanelli, Raffaele, I-47020 Gattolino - Cesena (FO) (IT)
(74) Representative: Lanzoni, Luciano

(56) References cited:
- FR-A- 2 477 042
- US-A- 4 660 665
- US-A- 4 957 619

## Description

The invention relates to an automatic apparatus for singularising and weighing bulbous fruit and vegetable produce of various shapes and sizes, comprising motorised conveyors, a plurality of trays each having a central cavity for receiving the single items of produce to be weighed, arranged in succession and superiorly supported on the conveyors, fixed frames individually supporting each of the trays and being connected to the conveyors , fixed walls bilateral to the conveyors for the containing of the produce, weighing means arranged inferiorly to and meeting the trays, so as temporarily to detach them from the conveyors for reading the weight of the trays and the produce during movement.

In the packing of fruit and vegetable produce the prior art automatic apparatus receive the produce (peaches, apples, kiwifruit, vegetables etc.) from a conveyor located upstream, collect them singly in the trays effecting also their singularisation, weigh them quickly and finally unload them selectively towards a series of outlets in the apparatus, where single types of produce are collected in groups of weight similarity.

In known-type apparatus the singularisation is effected by moving the conveyors transporting the trays at a speed which is above that of the speed with which the produce is fed on to the selfsame conveyor belt. Thus, by making available a larger number of trays than individual items of produce, each item of produce can be located singly on a single tray. However, since many trays travel empty, the apparatus operating in this way are oversized and massive in relation to their effective productivity, which obviously depends not on the number of trays loaded into them but on the number of trays filled.

Increasing the productivity of such apparatus simply by increasing their operative speed solves the problem up to a point, but at least two drawbacks hinder such an increase.

The first of these drawbacks is constituted by a drop in accuracy of the weighing operation, since, as is known, the said operation is performed at speed by means of weighing cells and is negatively affected by a margin of error that grows as the speed of the produce movement along the weighing cells grows.

The second drawback is constituted by an increase in the shaking of the produce which, apart from generally being disadvantageous because of the damage it does to the organic characteristics of the produce, becomes absolutely intolerable in the cases of very ripe or delicate fruits, such as for example kiwifruit.

In prior art apparatus the trays are further arranged in such a way as to exhibit a very small distance between the cavities of two successive trays. This permits of obtaining maximum productivity of such apparatus in relation to the apparatus total dimensions, although such a characteristic implies disadvantageously the need to predispose correctly sized trays in relation to the specific produce to be worked, so as to avoid the possibility of two items of produce in two adjacent trays coming into reciprocal contact and falsyfying the accuracy of the subsequent weight-reading phase.

In this last operative phase and in the subsequent unloading phase the prior art apparatus demonstrates further drawbacks. The trays are fixed to the belt by means of a fixed frame bearing a single pivot, having longitudinal axis, employed in a corresponding slot made in the body of the tray.

The trays are also equipped with two bilateral dragging appendages on corresponding support guides which, interacting with the appendages, at a certain point in the journey of the trays and corresponding to the position of the weighing cells, suspend the said tray from the frame and by detaching it from the longitudinal pivot, effect the weighing operation of the tray and the item of produce supported thereon.

A computer, which processes the value of the weight read by the weighing cells, subsequently commands the selective activation of a ramp of a series of rotatable ramps which, intercepting one of the appendages of the trays, sends the said appendage towards a wedge-shaped guide, raised with respect to the conveyor belt, so as to make the tray rotate about the longitudinal pivot, unloading the item of produce laterally towards an outlet from the apparatus.

Trays made in this way have the drawback of needing two guides to support each conveyor during the return phase of the apparatus.

Further, since the pivot destined for the suspension of the tray during the weighing is the same about which the rotation is performed during the tilting, after a certain period of use the said pivot tends to wear, modifying thus its initially cylindrical shape and correspondingly affecting the shape of the slot that it works in. This is the cause of growing friction, which during the weighing phase determines irregular movements of the pivot in the slot and thus a consequent error in the reading of the weight of a single item of produce. This error, multiplied by the number of items of produce passing through the apparatus during a day's work determines a total weighing error which cannot be ignored.

Further, thanks to the continual dragging of the tray appendages on the guides, the pivot is subject to tangential actions to the guides themselves, variable in time, which tend to affect the rotation axis and place strain also on the slots on the trays, aggravating the above-mentioned drawback.

An aim of the present invention, as it is characterised in the claims that follow, is thus that of eliminating the above-mentioned drawbacks. The invention substantially consists of an automatic apparatus to individualise and weigh bulbous fruit and vegetables of various shapes and sizes, comprising motorised conveyor belts, a plurality of trays having a central cavity for the containing of single items of produce to be weighed, arranged in succession and superiorly sustained by the said conveyor belts, fixed frames for the individual support of the interconnecting trays to the conveyor, fixed walls bilateral to the said conveyor belt for the containing of the produce and weighing means arranged inferiorly vertically in contact with the trays and shaped in such a way as to detach them temporarily from the belts and read their weight during the movement of the said produce.

The trays are shaped in such a way that their central cavity is equipped with inclined surfaces, converging in an edge at the longitudinal centre-line of the conveyor belt, the said surfaces being destined to interact with the fixed bilateral containing walls of the produce so that an item of produce interpositioned between the inclined walls and the fixed containing walls, that is an item which has not centred in the central cavity of a tray, is set in rotation on itself about a vertical axis pushing backwards with respect to the advancement direction of the conveyors all the produce already located in the central cavities of the following trays, up until a first unoccupied central cavity is found.

The apparatus according to the invention further envisages constituent elements which are functionally separate, for the tray lifting operation during the weighing and for the rotation of the said items of produce during the unloading phase of the produce.

The fundamental advantage afforded by the invention is constituted by the fact that because of the special produce-singularisation mechanism the degree of filling of the apparatus is considerably superior to that of prior art apparatus of the same dimensions.

This degree of filling, apart from the advantage of allowing a higher productivity, is independent of the movement velocity of the conveyor belts, thus enabling the conveyor to be run at speeds which do not encourage wear nor damage the produce by excessively shaking it.

A further advantage of the invention is constituted by the fact that the central cavities of two consecutive trays are reciprocally distanced from the inclined surfaces which surround the said cavities. This permits the uninterfered use of the same type of tray for a wide range of fruit and vegetable produce of different nature and of quite varied shapes and sizes.

Furthermore, because of the separate functioning of its constituent parts, problems caused by wear and tear are minimised with respect to the prior art apparatuses, with the advantage that the single-item weighing error is smaller and there is a longer useful working life of the parts most subject to wear.

Further advantages and characteristics of the invention will better emerge from the detailed description which follows, with the help of the accompanying drawings which represent a preferred embodiment, purely in the form of a non-limiting example, in which:
- Figure 1 shows a lateral view of the apparatus according to the invention;
- Figure 2 shows a partial plan view from above of the apparatus of figure 1.
- Figures 3 and 4 show respectively transversal sections of the invention made according to lines III-III and IV-IV of figure 2, indicating two successive operative phases of the invention.

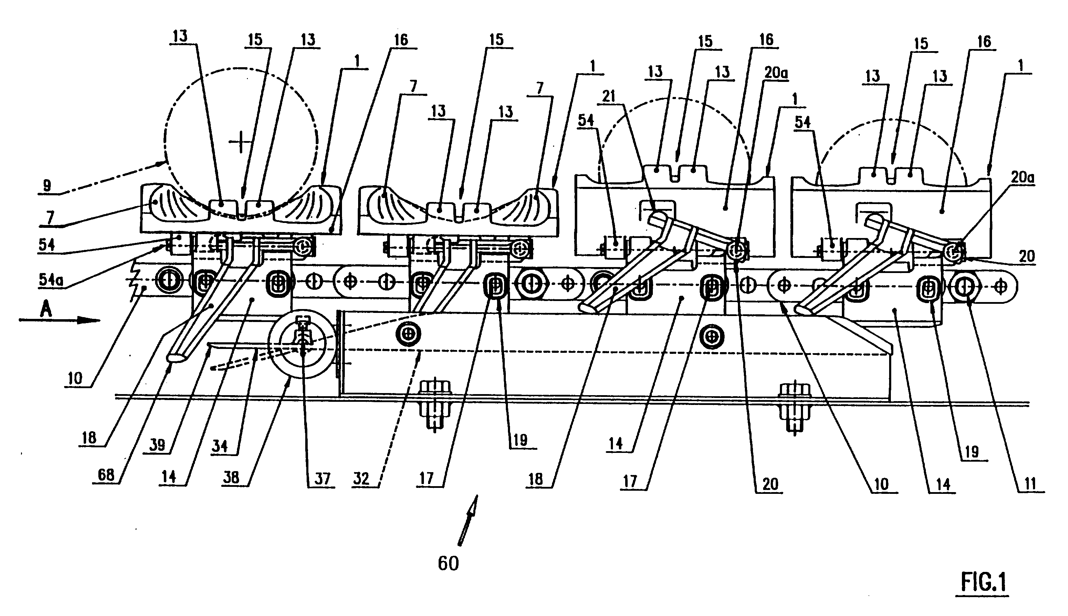

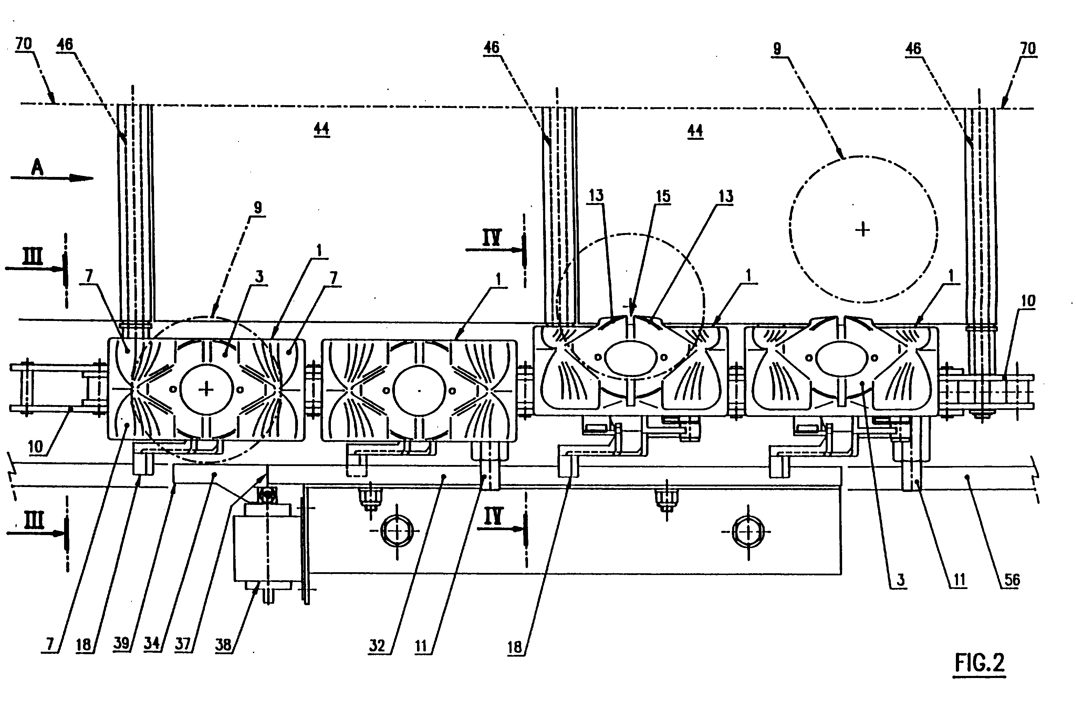

With reference to the drawings, the invention substantially consists of an automatic apparatus 60 to singularise and weigh bulbous fruit and vegetable produce 9 of varying shapes and sizes. Figures 2, 3 and 4, in which the apparatus 60 is represented in partial view since it is symmetrical with respect to a longitudinal axis 70 of symmetry, show that the said apparatus 60 comprises a pair of conveyors 10, parallel and motorised and interconnected by intermediate shafts 46; a plurality of trays 1 having a central cavity 3 for containing the single items of produce 9 to be weighed, arranged in succession and individually supported to the conveyors 10 by a fixed frame 12 of plastic material, interconnected to the said conveyors 10 by means of elastic hooking appendages 67 and equipped with transversal pivots 17 (see figure 1), bilateral to the conveyors 10.

The conveyors 10 are equipped with metal pivots 11, transversal and arranged in dragging contact, during the return phase of the conveyors 10 on sliding polythene guides 56 bilateral to the conveyors 10, so that a pair of guides 56 is associated to a conveyor 10 pair.

Between the conveyor 10, the apparatus 60 envisages the use of an elastic sheet 44, the use of which will better emerge hereinafter, inferiorly to which a synthetic carpet 50 is arranged, having the function of deadening the effect of the impacts the produce is subject to when it falls.

Bilaterally to the trays 1, the apparatus 60 is equipped with fixed walls 58 made in sheet metal and covered internally with a layer of rubber 65, which fixed walls 58 diverge and contain the produce 9.

Inferiorly to the conveyors 10 the apparatus 60 envisages weighing means 5 comprising a polythene plate 24 destined to inferiorly meet the conveyor 10 and supported by a T-shaped aluminium guide 26. The said weighing means 5 further comprise a U-shaped frame 30 supporting cylindrical guides 28 made in glass and associated to conventional weighing cells, not represented in the figures, having the task of reading, as will become clearer hereinafter, the weight of the trays 1 and the produce 9 contained in the said trays 1, during the conveyor 10 movement.

Between the fixed frame 12 and the corresponding tray 1 supported, the apparatus 60 comprises a first and a second frames 14, 16, one above the other.

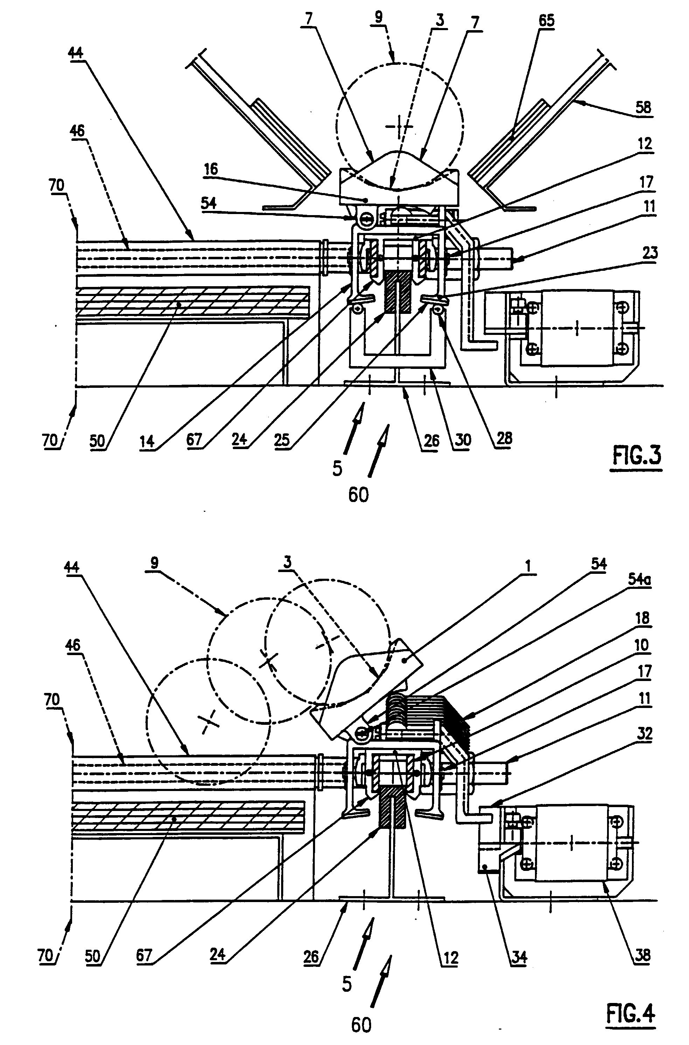

The first frame 14 (see figures 1 and 3) is associable to the weighing means 5 inferiorly arranged and is further equipped with slots 19 associated to the pivots 17 of the fixed frame 12 so as to oscillate vertically and be able to detach from the said fixed frame 12. The said first frame 14 is equipped with slides 23 with flat sliding surfaces 25 which during the movement of the conveyors 10, arriving at the zone where the weighing means 5 are located, are raised on to the longitudinal glass cylindrical guides 28, slightly raising the first frame 14 so as to detach it from the pivots 17 of the fixed frame 12, thus enabling the tray 1 and the produce 9 contained in it to be weighed.

Preferably, the flat sliding surfaces 25 of the slides 23 converge towards the longitudinal middle-point of the first frame 14 so as to allow the first frame 14 itself to self-centre on the cylindrical guides 28, thus avoiding considerable friction with the pivots 17 and the said fixed frame 12.

The second frame 16 is solid to the trays 1 and is interconnected to the first frame 14 by a hinge 54 with a longitudinal axis 54a to permit the tilting of the produce 9 on to the elastic sheet 44, by means of rotation imparted to the second frame 16, about the hinge 54 by a special tilting lever 18. The central cavity 3 of the trays 1 is equipped with two pairs of inclined surfaces 7 each converging in an edge at the longitudinal centre-line of the relative conveyor 10.

The inclined surfaces 7 (figure 3) interact with the fixed walls 58 to perform the singularisation of the produce 9 so that an item of produce interpositioned which is not located in an empty central cavity 3 is placed in rotation on its own axis, pushing backwards with respect to the advancement direction of the conveyors 10 (denoted by arrow A in figures 1 and 2) all of the produce 9 already located in the central cavities 3 of the trays 1 and following the said item of produce 9. This movement is performed up until the single item of produce 9 meets the first empty cavity 3 at which point all of the produce 9, comprising the one which began the chain reaction of the other items of produce 9, are located in the central cavities 3 of the trays 1.

Preferably the central cavity 3 has a spherical shape with a polycentric profile and has a smaller curvature according to the advancement direction of the conveyors 10 and larger curvature according to a transversal direction of the said conveyors 10. This has the aim of enabling the use of a same tray 1 to house produce of different sizes, without incurring the danger of reciprocal interference between produce 9 located on adjacent central cavities 3.

The central cavity 3 further comprises (figure 1) bilateral projections 13 functionally acting, transversally to the conveyors 10, on the produce 9 in such a way as to ensure the stability of the central cavity 3.

Between the bilateral projections 13 the apparatus 6 envisages a channel 15 interpositioned for the draining from the central cavity 3 of the water which might have been transported together with the produce 9.

The tilting lever 18 of the trays 1 is pivoted to the first frame 14 at a hinge 20 with a axis 20a transversal to the conveyors 10 and is equipped with a pushing end 21, substantially hemispherical, contactingly associated with the second frame 16 so as to produce rotation about the hinge 54 and thus effect the tilting of the produce 9 supported in the trays 1.

The tilting lever 18 of the trays 1 is associable to its own wedge-shaped sliding guides 32, independent and separated from the weighing means 5, by means of mobile guide ramps 34 activated by relative electromagnetic activating means 38 commanded by an electronic processor, not represented in the figures, which after having received the value of the weight of the produce in transit on the weighing cells, selectively establishes which outlet the particular produce 9 should be directed towards.

The mobile guide ramps 34 are rotatably interconnected to the sliding guides 32 at one fixed end 37 adjacent to the sliding guides 32 themselves and are directed so as to turn an opposite mobile end 39 to the tilting lever 18 of the trays 1 advancing towards the sliding guides 32. In their normal position (figure 1) the mobile guide ramps 34 are arranged in a raised position and leave an activating end 68 of the tilting lever 18 to transit freely.

When the mobile guide ramps 34 receive the lowering command they intercept the end 68 of the tilting lever 18 guiding it progressively towards the sliding guides 32 while progressively the second frame 16 is overturned bringing about the unloading of the produce 9 on to the elastic sheet 44, shown in figure 4.

A normal operative sequence of the apparatus 60 can be summed up as a phase of singularisation of produce 9, a weighing phase and a selective unloading phase.

During the singularisation phase, the produce 9 fed upstream of the apparatus 60, interacting with the fixed walls 58 and the central cavities 3 of the trays 1 is arranged one unit for each tray 1. As the conveyor 10 advances, the single trays 1 (figure 3) transiting on the cylindrical guides 28 arrive at the weighing means 5 and, while the first frame 14 is raised, the conveyor 10 is met by the lower plate 24.

Subsequently (see figure 2), while the weight lifted by the weighing cells is processed by the processor, the trays 1 continue to advance up until when the activation of the electromagnetic activating means 38 commands the raising of the mobile guide ramp 34 with the consequent tilting and unloading of the produce 9 towards the correct outlet of the apparatus 60.

## Claims

1. Automatic apparatus for singularising and weighing bulbous fruit and vegetable products of various shapes and sizes, comprising motorised conveyors (10), a plurality of trays (1) each having a central cavity (3) for receiving the single items of produce (9) to be weighed, arranged in succession and superiorly supported on the conveyors (10), fixed frames (12) individually supporting each of the trays (1) and being connected to the conveyors (10), fixed walls (58) bilateral to the conveyors (10) for the containing of the produce, weighing means (5) arranged inferiorly to and meeting the trays (1), so as temporarily to detach them from the conveyors (10) for reading the weight of the trays (1) and the produce (9) during movement, characterised in that each central cavity (3) of the trays (1) is equipped at ist longitudinal ends with two pairs of inclined surfaces (7) transverse to the longitudinal centre-line each converging in a raised edge at the longitudinal centre-line of the conveyors (10), for interacting with the fixed walls (58) so that an item of produce (9) there-interpositioned which has not centred in the central cavity (3) of a tray (1), is set in rotation on itself pushing backwards with respect to the advancement direction of the conveyors (10) all the items of produce (9) already located in the central cavities (3) of the following trays (1), up until a first unoccupied central cavity (3) is found.

2. An apparatus as in claim 1, charracterised in that the said conveyors (10) are arranged in pairs and are interconnected by intermediate shafts (46), the said conveyors (10) being equipped with transversal pivots (11) arranged in contact with and dragging on sliding guides (56) bilateral to the said conveyors (10).

3. An apparatus as in claim 1, characterised in that the said central cavity (3) is of spherical shape with a polycentric profile having a smaller curvature according to the advancement direction of the conveyor (10) and a larger curvature according to a transversal direction to the said conveyors (10).

4. An apparatus as in claim 1, characterised in that the said fixed frame (12) is equipped with pivots (17) transversal to the said conveyor (10), the said apparatus further comprising a first and a second frame (14, 16) placed one above the other interpositioned to the said fixed frame (12) and the said trays (1), the said first frame (14) being equipped with slots (19) associated to the said pivots (17) in such a way as to oscillate vertically detaching themselves from the said pivots (17) on the action of the said weighing means (5), the said second frame (16) being solid to the said trays (1) and interconnected to the said first frame (14) by a hinge (54) having a longitudinal axis (54a) to permit the tilting of the produce (9) by motion of rotation of the said second frame (16) about the said hinge (54).

5. An apparatus as in claims 1 or 3, characterised in that the said central cavity (3) comprises bilateral projections (13), transversal to the said conveyors (10) touching the produce (9) housed in the said central cavities (3).

6. An apparatus as in claim 2, characterised in that it comprises a pair of the said sliding guides (56) associated to a pair of the said conveyors (10).

7. An apparatus as in claim 4, comprising a tilting lever (18) of the trays (1), characterised in that the said lever (18) is associated to sliding guides (32) independent of the said weighing means (5), the said tilting lever (18) being pivoted to the said first frame (14) at a hinge (20) having an axis (20a) transversal to the said conveyors (10) and comprising a pushing end (21) associated to the said second frame (16).

8. An apparatus as in claim 4, characterised in that the said first frame (14) comprises slides (23) having flat sliding surfaces (25), the said slides (23) being associable to longitudinal cylindrical guides (28).

9. An apparatus as in claim 5, characterised in that it comprises a channel (15) interpositioned between the said projections (13) for the draining of the said central cavity (3).

10. An apparatus as in claim 7, characterised in that it comprises mobile guide ramps (23) arranged raisedly between the said tilting lever (18) and the said sliding guides (32) in such a way as to exhibit a fixed end (37) adjacent to the said sliding guides (32) while exhibiting an opposite mobile end (39) to the said tilting lever (18).

11. An apparatus as in claim 8, characterised in that the said flat surfaces (25) converge towards the longitudinal middle-point of the said first frame (14) in such a way as to permit the first said frame (14) to self-centre on the said cylindrical guides (28).

12. An apparatus as in claim 10, characterised in that the said cylindrical guides (28) are made of glass.

## Patentansprüche

1. Automatische Vorrichtung zum Absondern und Wiegen von Knollenfrüchten und vegetarischen Produkten verschiedener Form und Größe, bestehend aus motorisierten Förderern (10), einer Mehrzahl von Tabletts (1), von denen jedes einen Innenraum (3) zur Aufnahme der jeweils zu wiegenden Naturerzeugnisse (9) aufweist und die hintereinander angeordnet sind und oberhalb auf den Förderern (10) getragen werden, aus ortsfesten Rahmen (12), die einzeln jedes Tablett (1) tragen und mit den Förderern (10) verbunden sind, aus ortsfesten, beidseitig an den Förderern (10) angeordneten Wänden (58) zur Aufnahme der Naturerzeugnisse, aus unter den Tabletts (1) angeordneten und diesen begegnenden Wiegemitteln (5), um die Tabletts (1) zeitweise von den Förderern (10) zu entnehmen zum Ablesen des Gewichts der Tabletts (1) und der Naturerzeugnisse (9) während des Transportes, dadurch gekennzeichnet, daß jeder Innenraum (3) der Tabletts (1) an seinen Längsenden mit zwei Paaren von geneignten Flächen (7) versehen ist, die sich quer zur Längsmittellinie erstrecken und von denen jedes in eine erhöhte Ecke an der Längsmittellinie der Förderer (10) konvergiert, zur Erzeugung einer Wechselwirkung mit den ortsfesten Wänden (58), sodaß ein sich dazwischen befindendes Naturprodukt (9), das nicht zentrisch im Innenraum (3) eines Tabletts (1) angeordnet ist, selbständig in Rotation gebracht wird und alle Naturprodukte (9), die bereits in den Innenräumen (3) der folgenden Tabletts (1) angeordnet sind, bezüglich der Förderrichtung der Förderer (10) nach hinten drückt, bis ein erster nichtbesetzter Innenraum (3) angetroffen wird.

2. Vorrichtung nach Anspruch 1, dadurch gekennzeichnet, daß die besagten Förderer (10) in Paaren angeordnet und durch Zwischenwellen (46) miteinander verbunden sind, wobei die Förderer (10) mit Querzapfen (11) versehen sind, die in Kontakt mit beidseitig an den besagten Föderern (10) vorgesehenen Gleitführungen (56) angeordnet sind und an diesen ziehen.

3. Vorrichtung nach Anspruch 1, dadurch gekennzeichnet, daß der besagte Innenraum (3) eine Kugelform mit einem polyzentrischen Profil aufweist, mit einer kleineren Krümmung in Förderrichtung des Förderers (10) und einer größeren Krümmung in Querrichtung zu den besagten Förderern (10).

4. Vorrichtung nach Anspruch 1, dadurch gekennzeichnet, daß der besagte ortsfeste Rahmen (12) mit quer zum besagten Förderer (10) angeordneten Zapfen (17) versehen ist, und die besagte Vorrichtung weiterhin einen ersten und einen zweiten Rahmen (14, 16) aufweist, die einer über dem anderen zwischen dem besagten ortsfesten Rahmen (12) und den besagten Tabletts (1) angeordnet sind, und der besagte erste Rahmen (14) mit Nuten (19) versehen ist, die mit den besagten Zapfen (17) derart in Verbindung stehen, daß sie auf die Wirkung der besagten Wiegemittel (5) hin senkrecht schwingen, um sich von den besagten Zapfen (17) zu befreien, und der besagte zweite Rahmen (16) mit den besagten Tabletts (1) fest und mit dem besagten ersten Rahmen (14) durch ein Gelenk (54) verbunden ist, das eine Längsachse (54a) aufweist, die das Kippen des Naturerzeugnisses (9) durch eine Rotationsbewegung des besagten zweiten Rahmens (16) um das besagte Gelenk (54) erlaubt.

5. Vorrichtung nach Anspruch 1 oder 3, dadurch gekennzeichnet, daß der besagte Innenraum (3) beidseitige Vorsprünge (13) aufweist, die quer zu den besagten Förderern (10) verlaufen und mit dem in den besagten Innenräumen (3) aufgenommenen Naturerzeugnis (9) in Kontakt kommen.

6. Vorrichtung nach Anspruch 2, dadurch gekennzeichnet, daß sie ein Paar der besagten Gleitführungen (56) aufweist, das mit einem Paar der besagten Förderer (10) verbunden ist.

7. Vorrichtung nach Anspruch 4, einen Kipphebel (18) der Tabletts (1) enthaltend, dadurch gekennzeichnet, daß der besagte Hebel (18) mit Gleitführungen (32), unabhängig von den besagten Wiegemitteln (5), verbunden ist, der besagte Kipphebel (18) am besagten ersten Rahmen (14) durch ein Gelenk (20) drehbar gelagert ist, welches eine Achse (20a) quer zu den besagten Förderern (10) und ein mit dem besagten zweiten Rahmen (16) verbundenes, abstoßendes Ende (21) aufweist.

8. Vorrichtung nach Anspruch 4, dadurch gekennzeichnet, daß der besagte erste Rahmen (14) Gleitführungen (23) mit flachen Gleitflächen (25) aufweist, wobei die besagten Gleitführungen (23) mit zylindrischen Längsführungen (28) verbindbar sind.

9. Vorrichtung nach Anspruch 5, dadurch gekennzeichnet, daß sie eine Rinne (15) aufweist, die zwischen den besagten Vorsprüngen (13) angeordnet ist zum Entleeren des besagten Innenraumes (3) .

10. Vorrichtung nach Anspruch 7, dadurch gekennzeichnet, daß sie bewegliche Führungsrampen (23) aufweist, die erhöht zwischen dem besagten Kipphebel (18) und den besagten Gleitführungen (32) derart angeordnet sind, daß ein zu den besagten Gleitführungen (32) benachbartes, ortsfestes Ende (37) vorsteht, während ein gegenüberliegendes bewegliches Ende (39) zum besagten Kipphebel (18) vorsteht.

11. Vorrichtung nach Anspruch 8, dadurch gekennzeichnet, daß die besagten flachen Gleitflächen (25) zum Längsmittelpunkt des besagten ersten Rahmens (14) hin derart konvergieren, daß sich der erste besagte Rahmen (14) auf den besagten zylindrischen Führungen (28) selbstständig zentrieren kann.

12. Vorrichtung nach Anspruch 10, dadurch gekennzeichnet, daß die besagten zylindrischen Führungen (28) aus Glas sind.

## Revendications

1. Un appareil automatique destiné à séparer et à peser des fruits bulbeux et des produits végétaux de formes et de tailles variées, comprenant des convoyeurs motorisés (10), un ensemble de plateaux (1), présentant une cavité centrale (3) pour recevoir les différentes produits (9) à peser, disposés en séquence et supportés par le haut sur les convoyeurs (10), des châssis fixes (12), supportant individuellement chacun des plateaux (1) et reliés aux convoyeurs (10), des parois fixes (58) sur les deux côtés des convoyeurs (10), destinées à contenir les produits, des moyens de pesage (5) disposés de façon à venir sous les plateaux (1), afin de les détacher temporairement des convoyeurs (10), pour lire le poids des plateaux (1) et du produit (9) pendant le mouvement, caractérisé en ce que chacune des cavités centrales (3) des plateaux (1) est dotée à ses extrémités longitudinales de deux paires de surfaces inclinées (7) transversales à la ligne centrale longitudinale, dont chacune converge vers un bord surélevé au niveau de la ligne centrale longitudinale des convoyeurs (10), pour interagir avec les parois fixes (58), de façon à ce qu'un produit (9) y interposé, qui n'a pas centré la cavité centrale (3) d'un plateau (1), soit mis en rotation sur lui-même, et pousse en arrière par rapport à la direction d'avance des convoyeurs (10), tous les produits (9) déjà logés dans les cavités centrales (3) des plateaux suivants (1), jusqu'à ce que la première cavité vide (3) soit trouvée.

2. Un appareil tel qu'à la revendication 1, caractérisé en ce que lesdits convoyeurs (10) sont disposés par paire et sont reliés au moyen d'arbres intermédiaires (46), lesdits convoyeurs (10) étant dotés de pivots transversaux (11) touchant les glissières de guidage (56) situées des deux côtés des deux convoyeurs (10).

3. Un appareil tel qu'à la revendication 1, caractérisé en ce que ladite cavité centrale (3) est de forme sphérique avec un profil polycentrique présentant une courbure plus petite suivant la direction d'avance du convoyeur (10) et une plus grande courbure suivant la direction transversale desdits convoyeurs (10).

4. Un appareil tel qu'à la revendication 1, caractérisé en ce que ledit châssis fixe (12) est doté de pivots (17) transversaux audit convoyeur (10), ledit appareil comprenant en outre un premier et un deuxième châssis (14, 16) placés l'un au dessus de l'autre et s'interposant entre ledit châssis fixe (12) et lesdits plateaux (1), ledit premier châssis (14) étant doté de rainures (19) associées auxdits pivots (17), de façon à osciller verticalement en se détachant desdits pivots (17) par suite de l'action dudit moyen de pesage (5), ledit deuxième châssis (16) étant solidaire desdits plateaux (1) et relié audit premier châssis (14) au moyen d'une charnière (54) présentant un axe longitudinal (54a) pour permettre l'inclinaison du produit (9) par un mouvement de rotation dudit deuxième châssis (16) sur ladite charnière (54).

5. Un appareil tel qu'aux revendications 1 ou 3, caractérisé en ce que ladite cavité centrale (3) comprend des projections sur les deux côtés (13), transversales auxdits convoyeurs (10) touchant le produit (9) logé dans lesdites cavités centrales (3).

6. Un appareil tel qu'à la revendication 2, caractérisé en ce qu'il comprend une paire desdites glissières de guidage (56), associées à une paire desdits convoyeurs (10).

7. Un appareil tel qu'à la revendication 4, comprenant un levier d'inclinaison (18) des plateaux (1), caractérisé en ce que ledit levier (18) est associé aux glissières de guidage (32) indépendamment dudit moyen de pesage (5), ledit levier d'inclinaison (18) pivotant par rapport audit premier châssis (14) au moyen d'une charnière (20) présentant un axe (20a) transversal auxdits convoyeurs (10) et comprenant une extrémité de poussée (21) associée audit deuxième châssis (16).

8. Un appareil tel qu'à la revendication 4, caractérisé en ce que ledit premier châssis (14) comprend des glissières (23) présentant des surfaces de glissement plates (25), lesdites glissières (23) pouvant être associées à des guides cylindriques longitudinaux (28).

9. Un appareil tel qu'à la revendication 5, caractérisé en ce qu'il comprend un canal (15) interposé entre lesdites projections (13) pour l'évacuation de ladite cavité centrale (3).

10. Un appareil tel qu'à la revendication 7, caractérisé en ce qu'il comprend des rampes de guidage mobiles (23), surélevées entre ledit levier d'inclinaison (18) et lesdites glissières de guidage (32, de façon à présenter une extrémité fixe (37) adjacente auxdites glissières de guidage (32) tout en présentant une extrémité opposée mobile (39) audit levier d'inclinaison (18).

11. Un appareil tel qu'à la revendication 8. caractérisé en ce que lesdites surfaces plates (25) convergent vers le point central longitudinal dudit premier châssis (14) de façon à permettre audit premier châssis (14) de s'autocentrer sur lesdits guides cylindriques (28).

12. Un appareil tel qu'à la revendication 10, caractérisé en ce que lesdits guides cylindriques (28) sont faites de verre.
